# EUROPÄISCHE PATENTSCHRIFT

(11) **EP 3 247 972 B1**
(45) Veröffentlichungstag und Bekanntmachung des Hinweises auf die Patenterteilung: **15.05.2019**
(21) Anmeldenummer: 16707616.5
(22) Anmeldetag: 05.01.2016
(51) Int. Cl.: F42B 10/56, B64D 1/06, F42B 19/46, F41F 3/08

(54) **SCHWERGEWICHTSTORPEDO ZUM ABSETZEN IN EIN GEWÄSSER AUSSERHALB EINER SICHTWEITE EINES ZIELS SOWIE TRANSPORTSCHLITTEN UND FLUGZEUG**
HEAVYWEIGHT TORPEDO FOR DROPPING INTO A BODY OF WATER OUTSIDE OF A VISIBILITY RANGE OF A TARGET, TRANSPORT SLED, AND AIRCRAFT
TORPILLE LOURDE DESTINÉE À ÊTRE DÉPOSÉE DANS UN MILIEU AQUATIQUE HORS DE VUE D'UNE CIBLE, CHARIOT DE TRANSPORT ET AÉRONEF

(30) Priorität: 20.01.2015 DE 102015100729
(43) Veröffentlichungstag der Anmeldung: 29.11.2017
(73) Patentinhaber: ATLAS ELEKTRONIK GmbH, 28309 Bremen (DE)
(72) Erfinder: LÄMMLE, Knud, 22303 Hamburg (DE)
(74) Vertreter: thyssenkrupp Intellectual Property GmbH
(86) Internationale Anmeldenummer: PCT/DE2016/100002
(87) Internationale Veröffentlichungsnummer: WO 2016/116095

(56) Entgegenhaltungen:
- EP-A2- 1 806 287
- EP-A2- 2 428 445
- FR-A1- 2 679 023
- GB-A- 1 605 269
- US-B1- 6 293 202

## Beschreibung

Die Erfindung betrifft einen Schwergewichtstorpedo zum Absetzen in ein Gewässer außerhalb einer Sichtweite eines Ziels mit einem Fallschirm und einem Fallschirmlösemittel sowie ein Transportschlitten für ein Transportflugzeug und ein Flugzeug.

Üblicherweise werden heutzutage ausschließlich Leichtgewichttorpedos von Luftfahrzeugen aus gestartet. Dabei werden die Leichtgewichtstorpedos in die Nähe insbesondere eines getauchten zu zerstörenden Ziels verbracht und laufen das Ziel nach dem Wassereintritt über eigene Sensoren gesteuert an . Zum einen führt das dazu, dass das Luftfahrzeug sehr nah an das zu zerstörende Ziel heranfliegen muss, da die Reichweite der eingesetzten Torpedos nicht ausreicht. Mithin werden im Allgemeinen lediglich Leichtgewichtstorpedos mittels Flugzeugen oder Luftfahrzeugen verbracht. Zudem ist es im Allgemeinen erforderlich spezielle Bombenschächte oder Halterungen für derartige Torpedos am Luftfahrzeug anzubringen. Dies führt dazu, dass separate, spezialisierte Verbringsysteme sowie deren Infrastruktur für die Torpedos bereitgestellt werden müssen.

Ein Aussetzsystem, welches GPS-Signale und GPS-Signale während des Fluges nutzt um einen Torpedo an einer entfernten Position auszusetzen, ist aus der der US 6,293,202 B1 bekannt.

Aus der GB 1 605 269 ist eine Vorrichtung zum Steuern von Geräten, die aus der Luft ins Wasser abgesetzt werden, bekannt.

In der EP 1 806 287 A2 ist eine Vorrichtung für das automatische Abstoßen von Waffen von einer Ausziehplattform nach Fallschirm-Extraktion offenbart.

Aufgabe der Erfindung ist es den Stand der Technik zu verbessern.

Gelöst wird die Aufgabe durch ein Schwergewichtstorpedo zum Absetzen in ein Gewässer außerhalb einer Sichtweite eines Ziels mit einem Fallschirm und einem Fallschirmlösemittel und einem Wassereintrittsdetektionsmittel vorgesehen ist, wobei das Fallschirmlösemittel und das Wassereintrittsdetektionsmittel derart eingerichtet sind, dass die Fallschirmlösemittel in einer definierten Höhe des Schwergewichtstorpedos oberhalb eines Wasserspiegels aktiviert werden.

Ein derartiger Schwergewichtstorpedo kann, im Gegensatz zu bisher eingesetzten Torpedos, außerhalb der Sichtweite eines Ziels und oder in sehr großer Entfernung zu einem Ziel in ein Gewässer verbracht werden. Dies liegt unter anderem daran, dass der Schwergewichtstorpedo über einen ausreichenden Energievorrat für das Antriebssystem und andere Systeme verfügt, welcher gewährleistet, dass das programmierte Ziel insbesondere mittels einer hochpräzisen Wegpunktnavigation erreicht wird und die zugehörige Angriffsoperation durchgeführt werden kann.

Weiterhin sind Modifikationen an einem Flugkörper nicht notwendig. Somit entfallen etwaige spezielle Bombenschächte oder sonstige mechanische Vorrichtungen, da ein derartiges Schwergewichtstorpedo mit üblichen Verbringungsmitteln in das Gewässer abgesetzt werden kann.

Bei sehr großer Entfernung vom Abwurfpunkt zum Ziel wird zum einen die Gefahr minimiert, dass das Luftfahrzeug, welches den Schwergewichtstorpedo verbringt, während eines Einsatzes vom Gegner angegriffen und zerstört wird und zum anderen, dass der Torpedoabwurf vom Gegner aufgeklärt wird. Insbesondere können somit langsame Transportflugzeuge oder Transporthubschrauber eingesetzt werden, welche beispielsweise in einer niedrigen Operationshöhe von beispielsweise kleiner 50m oder kleiner 100m über der Wasseroberfläche den Schwergewichtstorpedo abwerfen können.

Üblicherweise können von derartigen, "langsamen" Luftfahrzeug keine Ziele, die über eine Luftabwehr verfügen, mit Torpedos angegriffen werden.

Weiterhin sind insbesondere im Fall des Einsatzes von Transportflugzeugen Modifikationen an dem Luftfahrzeug nicht notwendig. Es entfallen etwaige spezielle Bombenschächte oder sonstige mechanische Vorrichtungen in der Struktur des Luftfahrzeugs, da ein derartiger Schwergewichtstorpedo mit dem Transportschlitten unter Nutzung standardisierter Transport-und Sicherungsmittel im Laderaum des Luftfahrzeugs zum Abwurfpunkt transportiert wird. Diese Lagerung im Inneren des Luftfahrzeugs schützt den Torpedo während des Transports zusätzlich vor äußeren Einflüssen wie beispielsweise Vogelschlag, niedrigen Temperaturen, Fahrtwind, etc.

Durch die verwendeten Wassereintrittsdetektionsmittel kann sich der Schwergewichtstorpedo des geöffneten Fallschirms entledigen. Dieser dient insbesondere dazu, dass beim Abwurf die auf den Torpedo einwirkenden Kräfte derart verringert werden, dass eine Einsatzfähigkeit des Schwergewichtstorpedos gewährleistet ist.

### Folgendes Begriffliche sei erläutert:

Der "Schwergewichtstorpedo" oder gelegentlich auch das Schwergewichtstorpedo weist eine Länge von mindestens 4m auf. Je größer der Abstand vom Abwurfpunkt zu dem zu zerstörenden Ziel ist, desto länger kann der Schwergewichtstorpedo ausgestaltet sein. Insbesondere weist ein derartiges Schwergewichtstorpedo eine Länge von mehr als 5m oder sogar mehr als 6m auf. Während Leichtgewichttorpedos nach dem Stand der Technik lediglich eine Länge zwischen 1m bis 3m und einen Durchmesser von 15cm bis 20cm aufweisen, weist ein Schwergewichtstorpedo im Allgemeinen einen Durchmesser von mehr als 45cm oder sogar 60cm auf. Übliche Durchmesserangaben werden in Zoll ('') angegeben und liegen bei einem Schwergewichtstorpedo beispielweise bei 19'' oder 21''.

Unter "Absetzen in ein Gewässer" wird insbesondere das Verbringen oder der Abwurf des Schwergewichtstorpedos in einen See, Fluss oder ein Meer aus einem Luftfahrzeug heraus verstanden. Der Ort an dem dies durchgeführt wird, wird insbesondere als Abwurfpunkt bezeichnet.

"Außerhalb einer Sichtweite eines Ziels" bedeutet insbesondere, dass vom höchsten Punkt des Ziels oder, bei einem getauchten Fahrzeug" von der Wasseroberfläche aus das verbringende Luftfahrzeug optisch auf einer Geraden nicht zu erfassen ist, da sich das Luftfahrzeug insbesondere "hinter dem Horizont" beim Absetzen des Schwergewichtstorpedos befindet. Typische Einsatzhöhen für ein derartiges Luftfahrzeug liegen unterhalb von 100, insbesondere unterhalb von 50m und insbesondere unterhalb von 30m.

Bei dem "Ziel" handelt es sich insbesondere um ein Wasserfahrzeug oder eine sonstige insbesondere vom Menschen geschaffene Struktur auf oder in oder unterhalb eines Gewässers. Insbesondere sind damit Schiffe, U-Boote, Plattformen und dergleichen umfasst.

Unter einem "Fallschirm" wird insbesondere ein technisches Gerät verstanden, welches den Schwergewichtstorpedo aus einer Absetzhöhe im Wesentlichen unversehrt in das Gewässer verbringt. Eine Unversehrtheit ist dabei insbesondere gegeben, wenn nach dem Verbringen der Schwergewichtstorpedo seinen Einsatz erfolgreich fortführen kann. Bei dem Absetzvorgang vergrößert der Fallschirm insbesondere den Luftwiderstand oder erzeugt einen dynamischen Auftrieb, welcher die Fallgeschwindigkeit des Schwergewichtstorpedos verringert. Insbesondere weist ein derartiger Fallschirm eine meist aus Stoff oder Seide gefertigte Kappe auf, in welcher teilweise die Luft gestaut wird. Insbesondere handelt es sich bei dem Fallschirm und einen sogenannten Lastenfallschirm.

Bei dem "Fallschirmlösemittel" handelt es sich um eine oder mehrere Einrichtungen, welche die Verbindung von Torpedo und Fallschirm lösen oder derart in die Funktionsweise des Fallschirms einwirken, dass der Schwergewichtstorpedo ohne die retardierende Wirkung des Fallschirmes den Einsatz im oder unter Wasser im Wesentlichen ungehindert fortführen kann.

Das Fallschirmlösemittel kann dabei insbesondere mechanischer Natur sein, wie beispielsweise ein mechanisch entfernbarer Bolzen, oder können auch aufgrund chemischer oder elektrischer Wirkung oder gar mittels einer Sprengung wirken und oder ausgelöst werden. Auch kann das Fallschirmlösemittel passiv wie beispielsweise mittels einer Sollbruchstelle ausgebildet sein, welche beim Starten eines Torpedos unter Wasser dazu führt, dass der Fallschirm "abgerissen" wird. Insbesondere kann das Fallschirmlösemittel ein Sprengsatz sein, welcher definiert den Fallschirm oder mit dem Fallschirm verbundene Einrichtung absprengt.

Damit das Fallschirmlösemittel erst dann eingesetzt wird, wenn der Schwergewichtstorpedo vom Luftfahrzeug getrennt und so nah der Wasseroberfläche ist, dass er ohne die Wirkung des Fallschirms den Einsatz unbeschädigt fortsetzen kann, weist der Schwergewichtstorpedo mindestens ein "Wassereintrittsdetektionsmittel" auf.

Die Wassereintrittsdetektionsmittel ermitteln insbesondere einen Abstand zu einer Wasseroberfläche oder erkennen den Kontakt mit der Wasseroberfläche oder können feststellen, zu welchem Zeitpunkt zumindest Teile des Torpedos bereits in das Gewässer eingetaucht sind.

Der "Wasserspiegel" oder die "Wasseroberfläche" ist der insbesondere über die Zeit gemittelte Wasserspiegel, bei dem etwaige Wellenbewegungen bereits gemittelt sind.

Von einem "Teileintauchen" ist insbesondere dann auszugehen, wenn sich wenigstens 5% und weniger als 95% des Torpedovolumens unterhalb des Wasserspiegels befinden. Von einem vollständigen Eintauchen wird ab einem eingetauchten Volumen von 95% ausgegangen.

In einer weiteren Ausführungsform weisen die Wassereintrittsdetektionsmittel einen Drucksensor, ein Sonar, ein Leitfähigkeitssensor und/oder einen Abstandssensor auf.

Somit können unterschiedlich physikalisch-technische Messmethoden verwendet werden, um die Position des Schwergewichtstorpedos in Bezug zu dem Wasserspiegel zu bestimmen.

So kann beispielweise der Drucksensor anhand der Bestimmung des Luftdruckes die Höhe über dem Wasserspiegel bestimmen. Insbesondere wurde dabei beim Abwurf die Abwurfhöhe dem Torpedo als Messwertwert zur Verfügung gestellt und der für die Höhe relevante Luftdruck zum Kalibrieren vorab durch den Drucksensor bestimmt.

Auch kann ein alternativer Drucksensor das Eindringen des Torpedos in das Gewässer aufgrund der entsprechenden Druckbelastung auf ein Gehäuse des Schwergewichtstorpedos feststellen. Ein derartiger Drucksensor kann beispielsweise als Dehnungsmessstreifen ausgestaltet sein, welcher derartige Druckveränderungen mittels nachgeschalteter Elektronik ermittelt.

Das üblicherweise in dem Schwergewichtstorpedo im Bug vorhandene aktive Sonar kann beispielsweise in der Flugphase bereits ein Schallsignal aussenden, welches von der Wasseroberfläche reflektiert wird und eine Höheninformation aufgrund des Dopplereffekts oder der Sendeempfangsdauer bestimmen. Insbesondere kann das Sonar feststellen wann es in das Gewässer eingetaucht ist, da sich dadurch das charakteristische Verhalten des ausgesandten Schalls verändert.

Auch ein Leitfähigkeitssensor, welcher beispielsweise die Salinität des Gewässers detektiert, kann bestimmen, dass Teile des Torpedos im Wasser befindlich sind.

Neben dem Sonar kann als Abstandssensor auch ein optisches System eingesetzt werden, welches beispielsweise einen Laserstrahl oder ein optisches Signal einer Leuchtdiode auswertet.

Auch der Einsatz der Höheninformation aus dem Luftfahrzeug in Kombination mit einer Zeitmessung kann als Wassereintrittsdetektionsmittel genutzt werden.

Insbesondere um den Fallschirm mittels des Fallschirmlösemittels oberhalb des Wasserspiegels zu entfernen, können Wassereintrittsdetektionsmittel torpedobugseitig angeordnet sein. So können beispielsweise bei eingetauchtem Torpedokopf diese erkennen, dass sich der Torpedo teilweise im Gewässer befindet und somit das Fallschirmlösemittel aktivieren, so dass der Fallschirm abgetrennt wird und der restliche Torpedo in das Gewässer hineingleitet.

Um insbesondere die empfindlichen Antriebselemente des Schwergewichtstorpedos zu schützen, kann der Fallschirm torpedoheckseitig angeordnet sein, so dass die Antriebselemente die geringste mechanische Belastung erfahren.

In einer weiteren Ausführungsform ist der Fallschirm in einem zusammengelegten Zustand in einer Fallschirmkassette angeordnet. Somit kann vorteilhafterweise ein Torpedo mit aktivierbarem Fallschirm bereitgestellt werden. In dieser Ausführungsform können die Fallschirmlösemittel sowohl den Fallschirm selbst als auch die Fallschirmkassette lösen.

Es ist vorteilhaft das Antriebssystem des Torpedos möglichst spät vor dem Absetzen und dennoch sicher zu aktivieren. Daher kann der Schwergewichtstorpedo derart eingerichtet sein, dass ein Aktivieren des Antriebssystems mit oder nach einem Aktivieren des Fallschirms erfolgt. Dabei umfasst das Aktivieren insbesondere das Aktivieren der Energiesektion, weil insbesondere bei elektrischen Torpedos in den verwendeten Batterien mit dem Aktivieren ein Zusammenführen verschiedener chemischer Stoffe erfolgt und ein Aktivieren an diesem Punkt unumkehrbar ist. Falls der Torpedo nicht auf seine Einsatzmission geschickt wird, kann dies neben sehr hohen Kosten für neue Batterien auch zu einer Überhitzung führen, wenn der Torpedo nicht rechtzeitig eine ausreichende Kühlung, insbesondere durch den Einsatz von Wasser, erfährt.

In einer weiteren Ausführungsform weist der Schwergewichtstorpedo einen Datenspeicher auf, welcher Daten des Luftfahrzeugs, insbesondere Navigationsdaten, aufweist.

Um optimal Navigieren zu können, benötigt ein Schwergewichtstorpedo möglichst genaue Anfangspositions- und/oder Richtungsdaten. Für den Fall, dass der Schwergewichtstorpedo von einem Luftfahrzeug abgesetzt wird, kann der Torpedo die Positions- und/oder Richtungsdaten vom Luftfahrzeug erhalten, um mit diesen Daten als Fix und/oder als Erstorientierung zu starten.

In einem weiteren Aspekt wird die Aufgabe gelöst durch einen Transportschlitten für ein Transportflugzeug für einen zuvor beschriebenen Schwergewichtstorpedo.

Dies bietet den Vorteil, dass übliche bisher schon verwendete Transportschlitten und Sicherungsmittel für den Abwurf aus Transportflugzeugen verwendet werden können, welche vorliegend einen erfindungsgemäßen Schwergewichtstorpedo aufweisen.

Diese Art der Verbringung verringert die Kosten und setzt bisher erfolgreich getestete Systeme ein. Ein spezieller Umbau des Luftfahrzeugs ist nicht erforderlich. Zudem können Lösemittel vorgesehen sein, welche den Torpedo nach dem Aktivieren des Fallschirmes von dem Transportschlitten befreien. Auch kann der Transportschlitten im Flugzeug verbleiben und lediglich der Schwergewichtstorpedo durch Aktivieren des Fallschirmes ausgesetzt werden.

In einem zusätzlichen Aspekt wird die Aufgabe gelöst durch ein Flugzeug, insbesondere ein Transportflugzeug, welches einen zuvor beschriebenen Schwergewichtstorpedo oder einem zuvor beschriebenen Transportschlitten aufweist.

Somit kann ein System bereitgestellt werden, welches Schwergewichtstorpedos aus der Luft in ein Gewässer außerhalb der Sichtweite eines Ziels mittels eines Fallschirmes verbringt.

Unter dem Begriff "Flugzeug" sind sämtliche fliegenden Einrichtungen wie beispielsweise Transportflugzeuge oder Hubschrauber umfasst.

Insbesondere für den Fall, dass es sich bei dem Flugzeug um ein Transportflugzeug oder einen Transporthubschrauber handelt, kann das Flugzeug eine öffenbare Heckklappe aufweisen, über die, in einem geöffneten Zustand, der Schwergewichtstorpedo absetzbar ist. Beispielsweise weisen die Herkules C130 und die Transall C160 eine derartige öffenbare Heckklappe auf.

Damit Flugdaten oder sonstige Daten, welche in dem Luftfahrzeug vorgehalten, ermittelt oder über die Systeme des Luftfahrzeug weitergeleitet werden dem Schwergewichtstorpedo aufgeprägt werden können, weist das Flugzeug mindestens eine Datenleitung auf, welche mit dem Schwergewichtstorpedo datenaustauschend verbunden ist. Somit können zu einem sehr späten Zeitpunkt noch Navigations- und/oder Missionsdaten an den Schwergewichtstorpedo übermittelt werden.

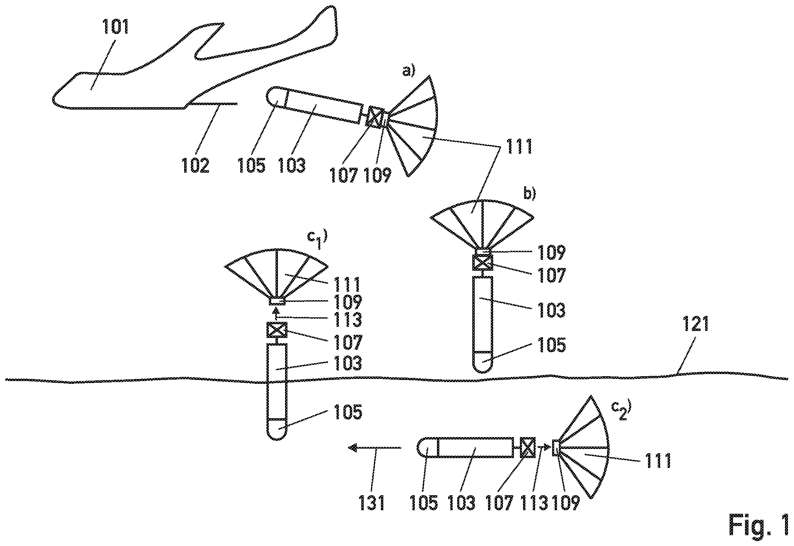

Im Weiteren wird die Erfindung anhand von Ausführungsbeispielen erläutert. Es zeigt
- Figur 1: eine schematische Darstellung zum Absetzen eines Schwergewichtstorpedos in ein Gewässer mittels eines Flugzeuges und dem zugehörigen Abtrennen des Fallschirmes.

Ein Transportflugzeug 101 weist eine öffenbare Heckklappe 102 auf. Im Inneren des Transportflugzeuges 101 ist ein Schwergewichtstorpedo 103 mit einer Länge von 5,0 m und einem Durchmesser von 19'' auf einem Transportschlitten (nicht dargestellt) angeordnet. Der Schwergewichtstorpedo 103 weist einen Sonarkopf 105, einen Antrieb 107 sowie eine Fallschirmkassette 109 mit einem zugehörigen Fallschirm 111 auf. Zudem ist der Schwergewichtstorpedo 103 über eine Datenleitung (nicht dargestellt) mit dem Navigationsrechner und über eine Stromversorgungsleitung (nicht dargestellt)mit dem Energiesystem des Transportflugzeugs 101 verbunden.

Um den Schwergewichtstorpedo 103 in das Gewässer zu verbringen, werden zuerst die Navigationsdaten zzgl. der Information in welcher Richtung Norden liegt an den Schwergewichtstorpedo 103 übermittelt. Anschließend wird bei geöffneter Heckklappe 102 der gefaltete Fallschirm 111 durch ein Öffnen der Fallschirmkassette 109 aktiviert. Dadurch öffnet sich der Fallschirm 111 und aufgrund des in der Fallschirmkappe eingreifenden (Fahrt-)Windes wird der Schwergewichtstorpedo 103 heckseitig aus dem Transportflugzeug 101 verbracht [siehe in Fig. 1 a.)].

Aufgrund der Gewichtskraft richtet sich der Schwergewichtstorpedo 103 im Wesentlichen vertikal mit dem Torpedokopf in Richtung Wasseroberfläche 121 aus [siehe Fig. 1 b.)].

In einer ersten Alternative [siehe Fig. 1 c1)], detektiert das aktive Sonar 105, dass der Schwergewichtstorpedo 103 sich unterhalb der Wasseroberfläche 121 befindet. Dadurch wird ein Sprengmechanismus aktiviert, welcher die Fallschirmkassette 109 mit samt dem Fallschirm 111 in Abtrennrichtung 113 abtrennt, so dass der Torpedo 103 vollständig und befreit von Fallschirmkassette 109 und Fallschirm 111 in das Gewässer gleitet. Anschließend verfolgt der Schwergewichtstorpedo 103 seine Mission und zerstört das hinter einer direkten Sichtlinie des Transportflugzeugs 101 liegende Ziel (nicht dargestellt).

In einer zweiten Alternative [siehe Fig. 1 c2)] taucht der Schergewichtstorpedo 103 vollständig mitsamt der Fallschirmkassette 109 und dem Fallschirm 111 in das Gewässer ein. Anschließend wird der Heckantrieb 107 gestartet, sodass der Schwergewichtstorpedo 103 in Fahrtrichtung 131 bewegt wird.

Die Fallschirmkassette 109 ist über eine Sollbruchstelle mit dem Rahmen des Heckantriebes 107 verbunden. Aufgrund der nun wirkenden Kräfte an der Sollbruchstelle durch die Bremswirkung des Fallschirms 111 bricht die Sollbruchstelle und die Fallschirmkassette 109 mitsamt dem Fallschirm 111 wird in Abtrennrichtung 113 abgetrennt. Der Schwergewichtstorpedo 103 verfolgt seine Mission und zerstört das außerhalb der Sichtweite liegende Ziel (nicht dargestellt).

### Bezugszeichenliste

- 101: Transportflugzeug
- 102: Heckklappe
- 103: Schwergewichtstorpedo
- 105: Sonarkopf
- 107: Antrieb
- 109: Fallschirmkassette
- 111: Fallschirm
- 113: Abtrennrichtung Fallschirm
- 121: Wasseroberfläche
- 131: Fahrtrichtung Schwergewichtstorpedo

## Patentansprüche

1. Schwergewichtstorpedo (103) zum Absetzen in ein Gewässer außerhalb einer Sichtweite eines Ziels mit einem Fallschirm (111) und einem Fallschirmlösemittel und einem Wassereintrittsdetektionsmittel, **dadurch gekennzeichnet, dass** das Fallschirmlösemittel und das Wassereintrittsdetektionsmittel derart eingerichtet sind, dass das Fallschirmlösemittel in einer definierten Höhe des Schwergewichtstorpedos oberhalb eines Wasserspiegels (121) aktiviert werden.

2. Schwergewichtstorpedo nach Anspruch 1, **dadurch gekennzeichnet, dass** die Wassereintrittsdetektionsmittel einen Drucksensor, ein Sonar, einen Leitfähigkeitssensor und/oder einen Abstandssensor aufweisen.

3. Schwergewichtstorpedo nach einem der vorherigen Ansprüche, **dadurch gekennzeichnet, dass** die Wassereintrittsdetektionsmittel torpedobugseitig angeordnet sind.

4. Schwergewichtstorpedo nach einem der vorherigen Ansprüche, **dadurch gekennzeichnet, dass** der Fallschirm torpedoheckseitig angeordnet ist.

5. Schwergewichtstorpedo nach einem der vorherigen Ansprüche, **dadurch gekennzeichnet, dass** in einem zusammengelegten Zustand der Fallschirm in einer Fallschirmkassette (109) angeordnet ist.

6. Schwergewichtstorpedo nach einem der vorherigen Ansprüche, **dadurch gekennzeichnet, dass** der Schwergewichtstorpedo derart eingerichtet ist, dass ein Aktivieren des Schwergewichtstorpedos mit oder nach einem Aktivieren des Fallschirms erfolgt.

7. Schwergewichtstorpedo nach einem der vorherigen Ansprüche, **gekennzeichnet durch** einen Datenspeicher, welcher Flugzeugdaten, insbesondere Flugzeugnavigationsdaten, aufweist.

8. System umfassend einen Transportschlitten für ein Transportflugzeug und einen Schwergewichtstorpedo nach einem der vorherigen Ansprüche.

9. Flugzeug (101), insbesondere Transportflugzeug, welches ein Schwergewichtstorpedo nach einem der Ansprüche 1 bis 7 oder ein System nach Anspruch 8 aufweist.

10. Flugzeug nach Anspruch 9, **gekennzeichnet durch** eine öffenbare Heckklappe (102), durch die, in einem geöffneten Zustand, der Schwergewichtstorpedo verbringbar ist.

11. Flugzeug nach Anspruch 9 oder 10, **gekennzeichnet durch** eine Datenleitung, welche mit dem Schwergewichtstorpedo datenaustauschend verbunden ist.

## Claims

1. Heavyweight torpedo (103) for dropping into a body of water outside a visibility range of a target, comprising a parachute (111) and a parachute-releasing means and a water-entry detection means, **characterized in that** the parachute-releasing means and the water-entry detection means are set up in such a way that the parachute-releasing means are activated at a defined height of the heavyweight torpedo above a surface of water (121).

2. Heavyweight torpedo according to Claim 1, **characterized in that** the water-entry detection means comprise a pressure sensor, a sonar, a conductivity sensor and/or a distance sensor.

3. Heavyweight torpedo according to either of the preceding claims, **characterized in that** the water-entry detection means are arranged at the nose of the torpedo.

4. Heavyweight torpedo according to one of the preceding claims, **characterized in that** the parachute is arranged at the tail of the torpedo.

5. Heavyweight torpedo according to one of the preceding claims, **characterized in that**, in a folded-together state, the parachute is arranged in a parachute casing (109).

6. Heavyweight torpedo according to one of the preceding claims, **characterized in that** the heavyweight torpedo is set up in such a way that an activation of the heavyweight torpedo takes place with or after an activation of the parachute.

7. Heavyweight torpedo according to one of the preceding claims, **characterized by** a data memory, which comprises aircraft data, in particular aircraft navigation data.

8. System comprising a transport sled for a transport aircraft and a heavyweight torpedo according to one of the preceding claims.

9. Aircraft (101), in particular a transport aircraft, which comprises a heavyweight torpedo according to one of Claims 1 to 7 or a system according to Claim 8.

10. Aircraft according to Claim 9, **characterized by** an openable tail flap (102), through which in an opened state the heavyweight torpedo can be brought.

11. Aircraft according to Claim 9 or 10, **characterized by** a data line, which is connected to the heavyweight torpedo in a data-exchanging manner.

## Revendications

1. Torpille pondéreuse (103) destinée à être déposée dans un plan d'eau hors du champ de vision d'une cible et présentant un parachute (111) et un moyen de déclenchement du parachute et un moyen détection de la pénétration dans l'eau, **caracterisé en ce que** le moyen de déclenchement du parachute et le moyen de détection de la pénétration dans l'eau sont conçus de telle sorte que le moyen de déclenchement du parachute est activé à une hauteur définie de la torpille pondéreuse au-dessus d'un niveau de l'eau (121).

2. Torpille pondéreuse selon la revendication 1, **caractérisée en ce que** les moyens de détection de la pénétration dans l'eau présentent un capteur de pression, un sonar, un capteur de conductivité et/ou un capteur de distance.

3. Torpille pondéreuse selon l'une des revendications précédentes, **caractérisée en ce que** les moyens de détection de la pénétration dans l'eau sont disposés dans l'ogive de la torpille.

4. Torpille pondéreuse selon l'une des revendications précédentes, **caractérisée en ce que** le parachute est disposé sur le côté arrière de la torpille.

5. Torpille pondéreuse selon l'une des revendications précédentes, **caractérisée en ce que** lorsqu'il est replié, le parachute est disposé dans une cassette (109) à parachute.

6. Torpille pondéreuse selon l'une des revendications précédentes, **caractérisée en ce que** la torpille pondéreuse est conçue de telle sorte qu'une activation de la torpille pondéreuse s'effectue avec ou après l'activation du parachute.

7. Torpille pondéreuse selon l'une des revendications précédentes, **caractérisée par** une mémoire de données qui présente des données d'aéromètre et en particulier des données de navigation d'aéronef.

8. Système comprenant un chariot de transport pour aéronef de transport et une torpille pondéreuse selon l'une des revendications précédentes.

9. Aéronef (101), en particulier aéronef de transport, qui présente une torpille pondéreuse selon l'une des revendications 1 à 7 ou un système selon la revendication 8.

10. Aéronef selon la revendication 9, **caractérisé par** un hayon arrière (102) apte à s'ouvrir et par lequel la torpille pondéreuse peut être amenée lorsqu'il est en position ouverte.

11. Aéronef selon les revendications 9 ou 10, **caractérisé par** un conducteur de données relié à échange de données à la torpille pondéreuse.
